# EUROPEAN PATENT SPECIFICATION

(11) **EP 4 749 077 B1**
(45) Date of publication and mention of the grant of the patent: **21.10.2026**
(21) Application number: 25192907.1
(22) Date of filing: 30.07.2025
(51) Int. Cl.: F01C 21/00, F04C 29/02, F04C 18/16

(54) **COMPRESSOR STRUCTURE**
VERDICHTERSTRUKTUR
STRUCTURE DE COMPRESSEUR

(30) Priority: 22.11.2024 TW 113145167
(43) Date of publication of application: 27.05.2026
(73) Proprietor: Fu Sheng Industrial Co. Ltd., Taipei City 104 (TW)
(72) Inventor: CHEN, TaiYu, 104 Taipei City (TW); WU, Yu-Feng, 104 Taipei City (TW)
(74) Representative: Wimmer, Hubert

(56) References cited:
- EP-A1- 3 719 322
- EP-A2- 1 229 249
- CA-A1- 2 363 745
- CN-A- 101 943 163
- US-A1- 2005 217 221

## Description

### BACKGROUND

### Technical Field

The invention relates to a compressor structure, and particularly relates to a compressor structure having an oil-gas separation design.

### Related Art

Screw compressors may be generally classified into oil-injected screw compressors and oil-free screw compressors. Although oil-free screw compressors can provide completely oil-free gas, needs for gas quality are higher, maintenance difficulty is high, and manufacturing costs are high. Therefore, oil-free screw compressors are not as widely applied as oil-injected screw compressors.

During an operation of an oil-injected screw compressor, a lubricating oil is injected into a compression chamber to perform lubrication and cooling on a rotor in the compression chamber, thereby reducing an operation temperature. First, the lubricating oil injected into the compression chamber may mix with a gas entering the compression chamber and be compressed by the rotor. Next, a mixed fluid formed by the lubricating oil and the compressed gas is discharged from the compression chamber and enters an oil tank. When the mixed fluid enters the oil tank, the mixed fluid may hit an inner wall of the oil tank or other components in the oil tank to perform preliminary separation on the lubricating oil and the compressed gas. However, the separation effect is generally poor, resulting in a gas with high oil content entering a system and increasing a consumption of the lubricating oil.
Attention is drawn to US 2005/217221 A1 describing a separator tank assembly comprising a cast hollow tank and a cast lid. The cast hollow tank has a closed end and an open end having a first opening and a second opening. The cast lid has a first passage configured for fluid communication with the tank first opening and a second passage configured for sealed fluid communication with the second opening. The first passage is formed with an integral port configured to receive a pressure control valve and the second passage is formed with an integral port configured to receive an oil filter and wherein the tank is configured such that air having undergone primary separation flows through the first opening and oil within the tank flows through the second opening.
Attention is further drawn to CN 101 943 163 A describing a two-stage medium-pressure screw-type air compressor set, comprising a first-stage screw compressor and a second-stage screw compressor, wherein the upper part of the first-stage screw compressor is provided with an air inlet; the lower part of the second-stage screw compressor is provided with an exhaust chamber which is communicated with a gas-liquid separator via a tangential gas-liquid inlet tube; the middle part of the gas-liquid separator is provided with a separated oil outlet tube; lubricating oil is injected to the lubricating part of the compressor via an oil-liquid filter; the rear part of the gas-liquid separator is provided with a secondary separator for secondarily separating moisture in the oil liquid; the secondary separator comprises an upper separating barrel and a lower separating barrel, wherein the upper part of the upper separating barrel is provided with a secondary oil inlet connected with an oil outlet tube, the lower part thereof is provided with a secondary oil outlet which is connected with the lubricating part of the compressor, an electric ball valve is arranged between the upper separating barrel and the lower separating barrel, the lower part of the lower separating barrel is provided with a secondary drain valve, and all components are controlled by PLC. This has the advantages of being capable of furthest lowering moisture and impurities in the lubricating oil, thereby having stable pressure elimination, high operation efficiency, good using reliability and safety, low noise and long service life.

### SUMMARY

The invention provides a compressor structure, which facilitates an enhancement of an oil-gas separation effect.

The invention provides a compressor structure, which includes a compressor housing, an oil tank, an oil-gas barrel, a motor, a first assembly base, at least one oil filter, a second assembly base, and at least one oil mist separator. The compressor housing has a compression chamber. The oil-gas barrel is integrally cast and formed with the compressor housing and the oil tank. The first assembly base is respectively disposed on opposite sides of the compressor housing with the motor. The first assembly base has an oil-gas flow passage. The compression chamber is communicated with the oil-gas barrel through the oil-gas flow passage. The at least one oil filter is disposed on the first assembly base and communicates with the compression chamber through the first assembly base. The second assembly base is disposed on the oil-gas barrel. The at least one oil mist separator is disposed on the second assembly base and communicates with the oil-gas barrel through the second assembly base.

Based on the above, in the compressor structure of the invention, a mixed fluid formed by a lubricating oil and a compressed gas may sequentially perform oil-gas separation in the oil-gas flow passage and in the oil-gas barrel after being discharged from the compression chamber to separate most of the lubricating oil from the compressed gas before entering the oil tank and the oil-gas barrel for storage. Therefore, the compressor structure of the invention can not only prevent a compressed gas with high oil content from entering a system, but also can decrease a consumption of the lubricating oil. On the other hand, the compressor housing, the oil tank, and the oil-gas barrel are integrally cast and formed, which can not only significantly improve structural strength, decrease assembly processes, improve manufacturing efficiency and reduce manufacturing costs, but also can improve sealing performance to effectively decrease an oil-gas leakage phenomenon.

In order to make the features and advantages of the invention more comprehensible, the following examples are given and described in detail with the accompanying drawings as follows.

### BRIEF DESCRIPTION OF THE DRAWINGS

FIG. 1A and FIG. 1B are schematic views of a compressor structure according to an embodiment of the invention from two different viewing angles.
FIG. 1C is a schematic view of the bearing base cover of FIG. 1A being detached from the bearing base.
FIG. 1D is a schematic partial enlarged view of the bearing base of FIG. 1C from another viewing angle.
FIG. 1E is a schematic partial cross-sectional view of FIG. 1C.
FIG. 1F is a schematic top view of a flow path of the compressor structure of FIG. 1A.
FIG. 2A is a schematic front view of the compressor structure of FIG. 1A.
FIG. 2B is a schematic cross-sectional view of FIG. 2A along line segment 2B-2B.
FIG. 2C is a schematic cross-sectional view of FIG. 2A along line segment 2C-2C.
FIG. 2D is a schematic view where the first rotor and the second rotor of FIG. 2C are removed.
FIG. 2E is a schematic cross-sectional view of FIG. 2A along line segment 2E-2E.
FIG. 3 is a schematic view of a configuration of an oil tank and an external cooler of a compressor structure according to another embodiment of the invention.
FIG. 4 is a schematic view of a compressor structure according to yet another embodiment of the invention.

### DESCRIPTION OF THE EMBODIMENTS

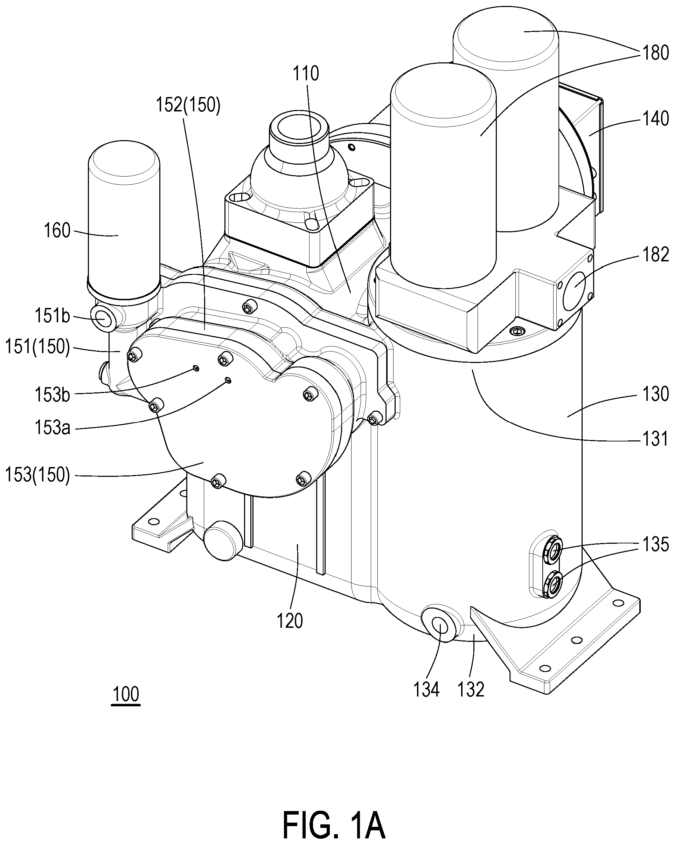

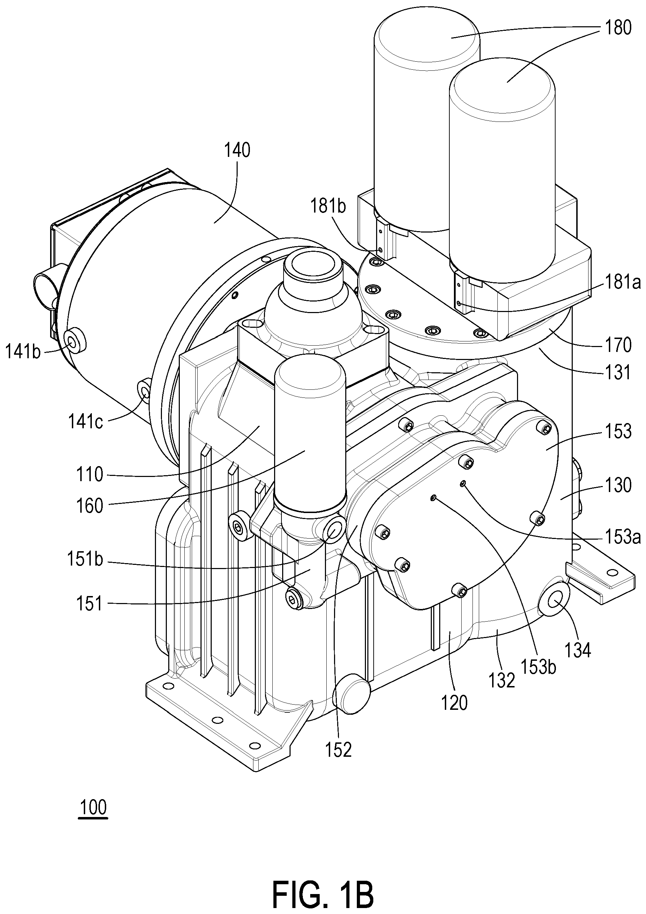

Please refer to FIG. 1A and FIG. 1B. In the embodiment, a compressor structure 100 includes a compressor housing 110, an oil tank 120, an oil-gas barrel 130, a motor 140, a first assembly base 150, at least one oil filter 160, a second assembly base 170, and at least one oil mist separator 180. In detail, the compressor housing 110, the oil tank 120, and the oil-gas barrel 130 are integrally cast and formed, which not only can significantly improve structural strength, decrease assembly processes, improve manufacturing efficiency and reduce manufacturing costs, but also can improve sealing performance to effectively decrease an oil-gas leakage phenomenon. In addition, since the compressor housing 110, the oil tank 120, and the oil-gas barrel 130 are integrally cast, not only can a complex geometric design be implemented, but also a compactness of structural configuration can be enhanced to reduce volume.

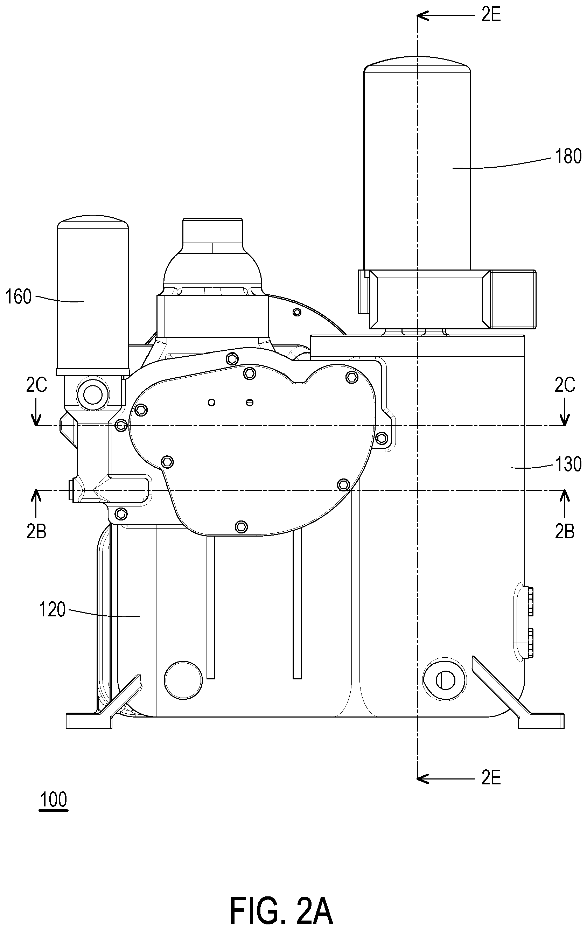

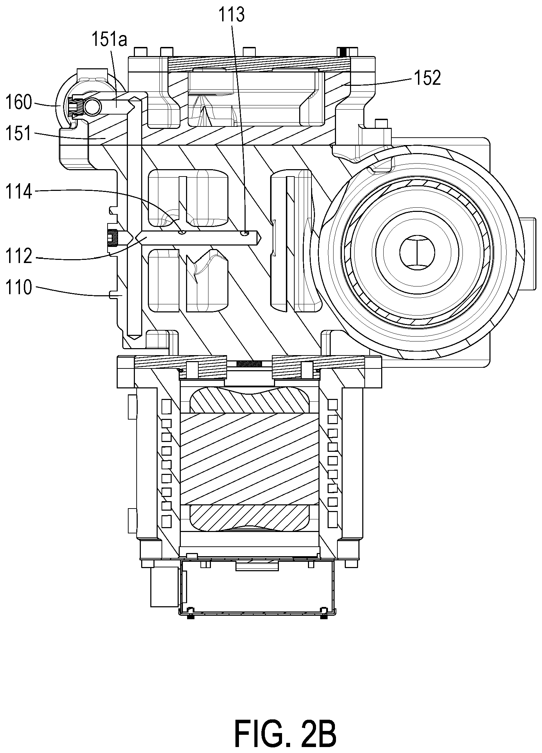

As shown in FIG. 1A, FIG. 1B, FIG. 2A and FIG. 2B, the motor 140 and the first assembly base 150 are respectively disposed on opposite sides of the compressor housing 110. The oil filter 160 is disposed on the first assembly base 150 and located on the outside of the first assembly base 150. In addition, the second assembly base 170 is disposed on the oil-gas barrel 130. The oil mist separator 180 is disposed on the second assembly base 170 and located on the outside of the second assembly base 170. Based on the foregoing assembly configuration, the compactness of structural configuration can be enhanced to reduce volume.

For example, the first assembly base 150 may be locked and fixed to the compressor housing 110 through bolts, screws or other locking components. In addition, the second assembly base 170 may be locked and fixed to a top 131 of the oil-gas barrel 130 through bolts, screws or other locking components.

As shown in FIG. 1B to FIG. 1D, the first assembly base 150 includes an oil filter base 151 and a bearing base 152. The oil filter base 151 and the bearing base 152 are integrally cast and formed, which not only can significantly improve structural strength, decrease assembly processes, improve manufacturing efficiency and reduce manufacturing costs, but also can improve sealing performance to effectively decrease the oil-gas leakage phenomenon. In addition, since the oil filter base 151 and the bearing base 152 are integrally cast, not only can the complex geometric design be implemented, but also the compactness of structural configuration can be enhanced to reduce volume.

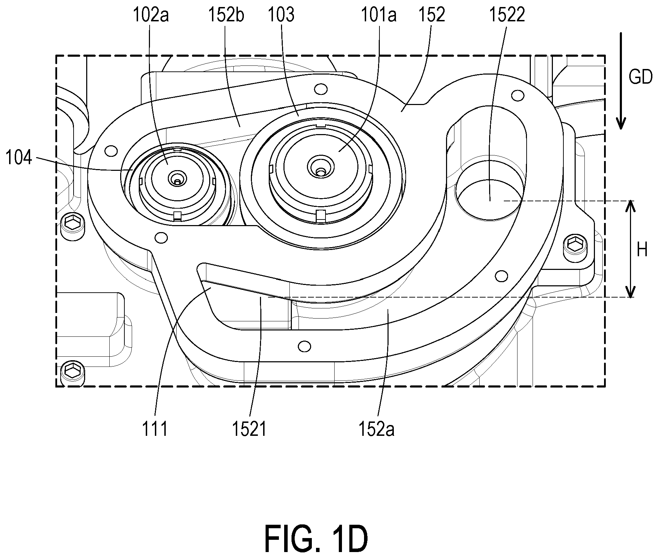

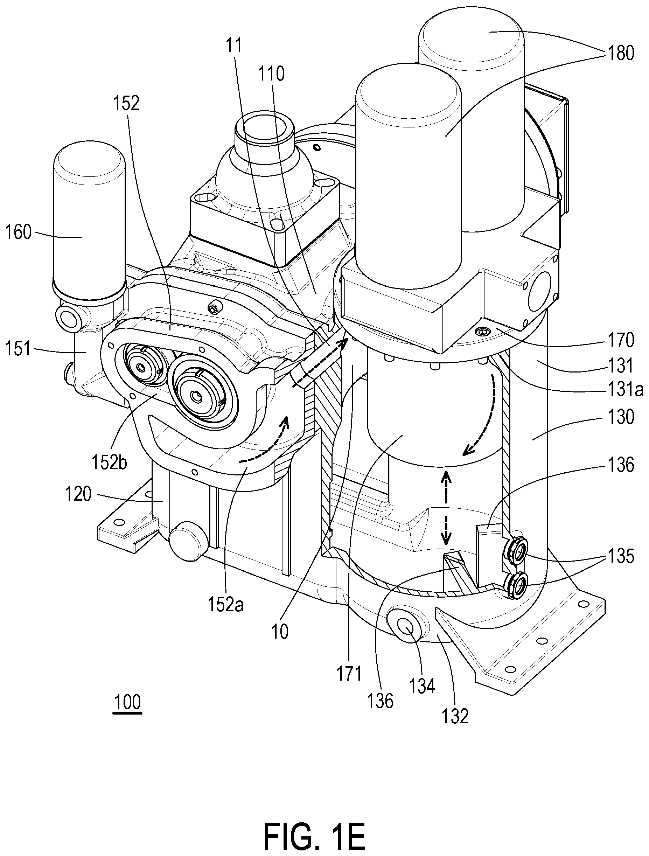

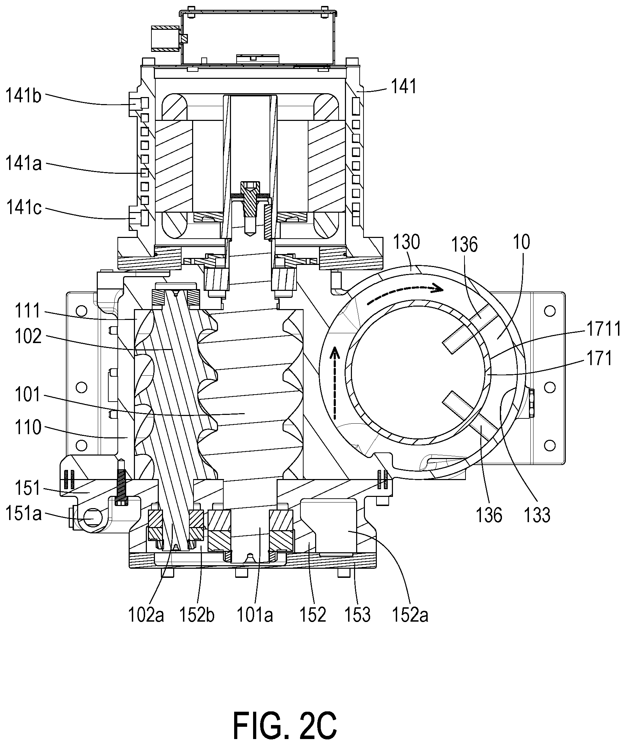

As shown in FIG. 1D, FIG. 1E, FIG. 2B and FIG. 2C, in the embodiment, the oil filter 160 is disposed on the oil filter base 151. The first assembly base 150 has an oil-gas flow passage 152a and a bearing assembly space 152b formed in the bearing base 152. In detail, the oil-gas flow passage 152a and the bearing assembly space 152b are separated from each other. The oil-gas flow passage 152a extends toward the oil-gas barrel 130 along an arc path from bottom to top around the bearing assembly space 152b. The compression chamber 111 of the compressor housing 110 is communicated with the oil-gas barrel 130 through the oil-gas flow passage 152a.

The compressor structure 100 further includes a first rotor 101 and a second rotor 102 disposed in parallel in the compression chamber 111, and a first bearing 103 and a second bearing 104 disposed in parallel in the bearing assembly space 152b. The first rotor 101 is coupled to the motor 140. The first rotor 101 and the second rotor 102 may be two screws engaging with each other. On the other hand, an end 101a of the first rotor 101 is inserted into the bearing assembly space 152b. The first bearing 103 is sleeved on the end 101a of the first rotor 101. An end 102a of the second rotor 102 is inserted into the bearing assembly space 152b. The second bearing 104 is sleeved on the end 102a of the second rotor 102.

For example, the first rotor 101 and that second rotor 102 engaging with each other may be disposed horizontally left and right. However, the invention is not limited thereto. The first rotor 101 and that second rotor 102 engaging with each other may also be disposed vertically up and down, or disposed with their respective long axes (or rotation axes) having a height difference in a gravity direction GD.

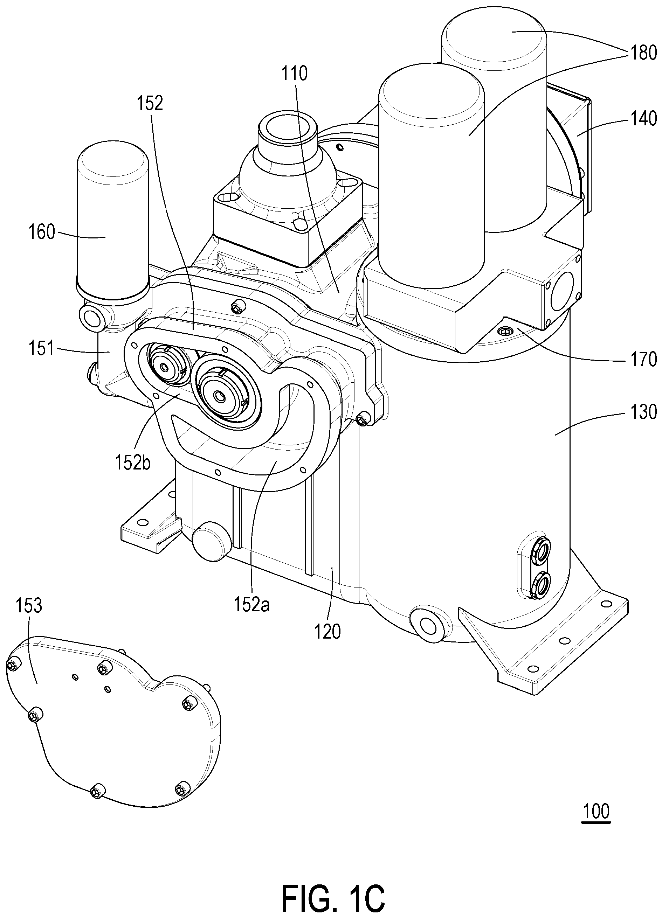

As shown in FIG. 1A, FIG. 1C and FIG. 2C, the first assembly base 150 further includes a bearing base cover 153 disposed on the bearing base 152 to cover or close the bearing assembly space 152b and the oil-gas flow passage 152a. For example, the bearing base cover 153 may be locked and fixed to the bearing base 152 through bolts, screws or other locking components to cover or close the bearing assembly space 152b and the oil-gas flow passage 152a, which not only can avoid oil-gas leakage, foreign matter intrusion or moisture intrusion, but also can improve convenience in cleaning, replacement or maintenance.

As shown in FIG. 1A, FIG. 1B and FIG. 1E, the oil tank 120 is disposed under the compressor housing 110. The oil-gas barrel 130 is disposed on a side of the oil tank 120. In addition, the motor 140 and the first assembly base 150 are respectively disposed on opposite sides of the compressor housing 110. The oil-gas barrel 130 communicates with the oil-gas flow passage 152a of the bearing base 152 to be disposed opposite to the motor 140 through the bearing base 152.

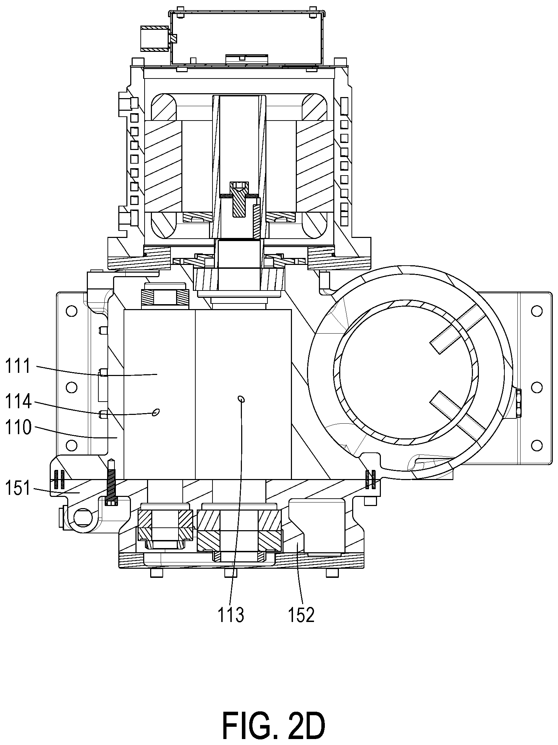

As shown in FIG. 1C, FIG. 2B, FIG. 2C and FIG. 2D, the oil filter 160 may communicate with the compression chamber 111 through the first assembly base 150, specifically communicating with the compression chamber 111 through the oil filter base 151. In detail, the oil filter base 151 has a first internal oil path 151a. The compressor housing 110 further has a second internal oil path 112 communicating with the compression chamber 111. The first internal oil path 151a is communicated with the second internal oil path 112. The oil filter 160 is communicated with the compression chamber 111 through the first internal oil path 151a and the second internal oil path 112. On the other hand, the compressor housing 110 further has a first oil injection hole 113 disposed corresponding to the first rotor 101 and a second oil injection hole 114 disposed corresponding to the second rotor 102. The second internal oil path 112 is communicated with the compression chamber 111 through the first oil injection hole 113 and the second oil injection hole 114.

First, solid impurities in a lubricating oil may be filtered out through the oil filter 160. Next, the lubricating oil is transported to the first internal oil path 151a from the oil filter 160, and then transported to the second internal oil path 112 from the first internal oil path 151a. Then, the lubricating oil is injected or sprayed into the compression chamber 111 through the first oil injection hole 113 and the second oil injection hole 114 from the second internal oil path 112 to perform lubrication and cooling on the first rotor 101 and the second rotor 102.

For example, hole axes of the first oil injection hole 113 and the second oil injection hole 114 are not perpendicular to long axes or rotation axes of the first rotor 101 and the second rotor 102, but are inclined to the long axes or the rotation axes the first rotor 101 and the second rotor 102. Therefore, the lubricating oil injecting or spraying into the compression chamber 111 is designed to utilize an oblique injection or an oblique spraying to perform lubrication and cooling of the first rotor 101 and the second rotor 102 over a larger range.

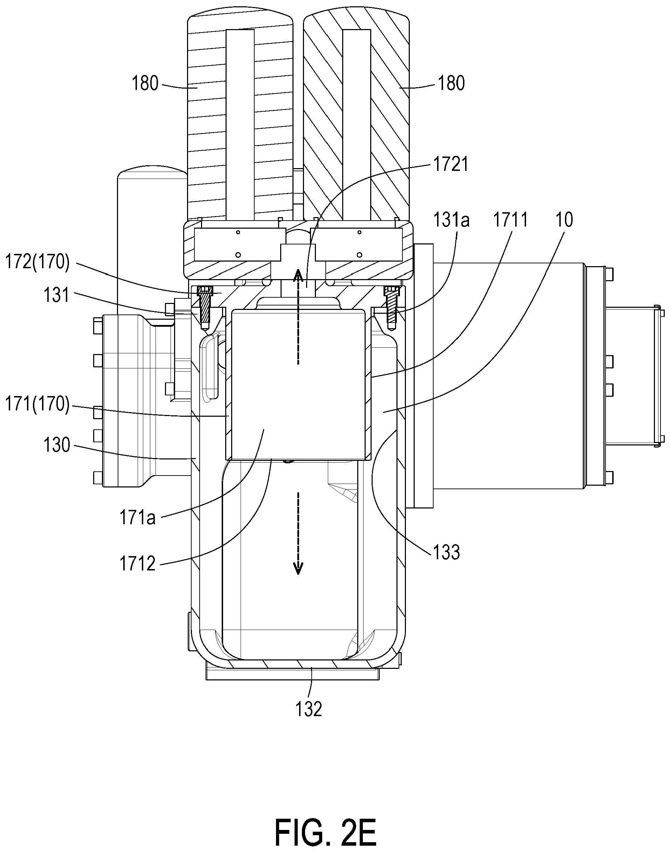

As shown in FIG. 1A, FIG. 1E, FIG. 2C and FIG. 2E, the oil mist separator 180 may communicate with the oil-gas barrel 130 through the second assembly base 170. In detail, the second assembly base 170 includes an oil-gas separation cylinder 171 and a barrel cover 172 connected to the oil-gas separation cylinder 171. The oil-gas separation cylinder 171 and the barrel cover 172 may be integrally formed. The top 131 of the oil-gas barrel 130 has a top opening 131a. The second assembly base 170 is disposed on the top 131 and covers or closes the top opening 131a. Specifically, the barrel cover 172 covers or closes the top opening 131a.

For example, the barrel cover 172 may be locked and fixed to the top 131 of the oil-gas barrel 130 through bolts, screws or other locking components to cover or close an internal space of the oil-gas barrel 130, which not only can avoid oil-gas leakage, foreign matter intrusion or moisture intrusion, but also can improve convenience in cleaning, replacement or maintenance.

As shown in FIG. 1E, FIG. 2C and FIG. 2E, the oil-gas separation cylinder 171 is inserted into the oil-gas barrel 130 from the top opening 131a and extends toward a bottom 132 of the oil-gas barrel 130. The oil-gas separation cylinder 171 is generally located in an upper half portion of the internal space of the oil-gas barrel 130. An annular flow passage 10 is formed in the upper half portion of the internal space of the oil-gas barrel 130 between an inner wall surface 133 of the oil-gas barrel 130 and an outer wall surface 1711 of the oil-gas separation cylinder 171. The oil-gas flow passage 152a is communicated with the annular flow passage 10. In detail, the oil-gas separation cylinder 171 may be a hollow cylinder and has an oil-gas separation space 171a surrounded by the annular flow passage 10. A communication position 11 of the oil-gas flow passage 152a and the annular flow passage 10 is close to the top opening 131a. The oil-gas separation space 171a has a bottom opening 1712 facing the bottom 132. That is to say, the oil-gas separation space 171a communicates with the internal space of the oil-gas barrel 130 and also communicates with the annular flow passage 10.

The oil mist separator 180 is disposed on the barrel cover 172 and is disposed on the outside the barrel cover 172. In addition, the barrel cover 172 has an oil-gas port 1721. The oil-gas port 1721 communicates with the oil-gas separation space 171a. Therefore, the oil mist separator 180 may be communicated with the oil-gas separation space 171a through the oil-gas port 1721, and communicates with the internal space of the oil-gas barrel 130 through the oil-gas separation space 171a, and also communicates with the annular flow passage 10.

As shown in FIG. 1D, FIG. 1E, FIG. 2C and FIG. 2D, the lubricating oil injected or sprayed into the compression chamber 111 may mix with a gas entering the compression chamber 111, and be compressed by the first rotor 101 and the second rotor 102. Next, a mixed fluid formed by the lubricating oil and the compressed gas is discharged from the compression chamber 111 and flows into the oil-gas flow passage 152a. Since the oil-gas flow passage 152a extends toward the oil-gas barrel 130 along an arc path from bottom to top around the bearing assembly space 152b, the mixed fluid may be subjected to a centrifugal force during the process of the mixed fluid flowing toward the oil-gas barrel 130 in the oil-gas flow passage 152a to separate a portion of the lubricating oil from the compressed gas. This is a first oil-gas separation.

In the embodiment, the oil-gas flow passage 152a has a first port 1521 communicated with the compression chamber 111 and a second port 1522 communicated with the oil-gas barrel 130. In the gravity direction GD, there is a height difference H between the second port 1522 and the first port 1521. Specifically, the second port 1522 is higher than the first port 1521. Therefore, during the process of the mixed fluid flowing to the second port 1522 from the first port 1521, the lubricating oil separated from the compressed gas may be subject to the action of gravity and drip to a bottom of the oil-gas flow passage 152a.

Specifically, in order to allow an overall configuration of the compressor structure 100 to be more compatible to practical application needs, when a position of the top 131 of the oil-gas barrel 130 is higher than a height of the first port 1521 of the compression chamber 111, the second port 1522 of the oil-gas flow passage 152a is higher than the first port 1521 (that is, there is a height difference H between the second port 1522 and the first port 1521 in the gravity direction GD), so that the mixed fluid formed by the lubricating oil and the compressed gas may enter the oil-gas barrel 130 along the oil-gas flow passage 152a from bottom to top after being discharged from the compression chamber 111. In addition, when the position of the top 131 of the oil-gas barrel 130 is not higher than the height of the first port 1521 of the compression chamber 111, the second port 1522 of the oil-gas flow passage 152a is at a same height as the first port 1521 (that is, there is no height difference between the second port 1522 and the first port 1521 in the gravity direction GD), or the second port 1522 of the oil-gas flow passage 152a is lower than the first port 1521, so that the mixed fluid formed by the lubricating oil and the compressed gas may smoothly enter the oil-gas barrel 130 along the oil-gas flow passage 152a after being discharged from the compression chamber 111.

Next, as shown in FIG. 1E, FIG. 2C and FIG. 2E, the mixed fluid flows into the annular flow passage 10 from the second port 1522, and flows along a spiral path from the top 131 to the bottom 132 of the oil-gas barrel 130 in the annular flow passage 10 to separate most of the lubricating oil from the compressed gas through cyclone separation. This is a second oil-gas separation. At the same time, the lubricating oil may be subject to the action of gravity and drip to the bottom 132 of the oil-gas barrel 130. Since the oil-gas barrel 130 communicates with the oil tank 120, the lubricating oil may be further recovered to the oil tank 120.

As shown in FIG. 1E and FIG. 2E, after most of the lubricating oil is separated from the compressed gas, the compressed gas flows into the oil-gas separation space 171a from the bottom opening 1712, and then flows to the oil mist separator 180 from the oil-gas port 1721. In detail, the oil mist separator 180 may filter out tiny oil droplets remaining in the compressed gas to avoid the tiny oil droplets from entering the system with the compressed gas. This is a third oil-gas separation.

As shown in FIG. 1E, the oil-gas separation cylinder 171 is generally located in the upper half portion of the internal space of the oil-gas barrel 130. A lower half portion of the internal space of the oil-gas barrel 130 communicates with the oil tank 120. This design facilitates an increase of an oil storage capacity of the compressor structure 100. In addition, since the oil tank 120 is not directly communicated with the oil-gas flow passage 152a, the mixed fluid from the oil-gas flow passage 152a does not directly enter the oil tank 120, but first performs oil-gas separation in the oil-gas barrel 130 to enhance an oil-gas separation effect.

As shown in FIG. 1D, FIG. 1E, FIG. 2C and FIG. 2E, the bearing base 152 and the oil-gas barrel 130 are two connected casting members. The oil-gas flow passage 152a is located in the bearing base 152. The communication position 11 is located in the oil-gas barrel 130. Furthermore, the oil-gas flow passage 152a and the communication position 11 may compose an internal channel of the two casting members. One end of the internal channel (that is, the first port 1521 of the oil-gas flow passage 152a) is communicated with a gas outlet of the compression chamber 111. The other end of the internal channel (that is, the communication position 11) is communicated with the oil-gas barrel 130 facing a tangential direction of the outer wall surface of the oil-gas barrel 130 (i.e., in a direction parallel to the tangential direction of the outer wall surface 1711 of the oil-gas separation cylinder 171).

As shown in FIG. 1A, FIG. 1B, FIG. 1C and FIG. 1E, in the embodiment, the oil tank 120 is disposed under the compressor housing 110. The oil-gas barrel 130 is disposed on a side of the oil tank 120. Based on this configuration, an extension path of the oil-gas flow passage 152a communicating with the oil-gas barrel 130 is an arc path surrounding the bearing assembly space 152b. The bearing assembly space 152b and the arc path may be on a same plane in space.

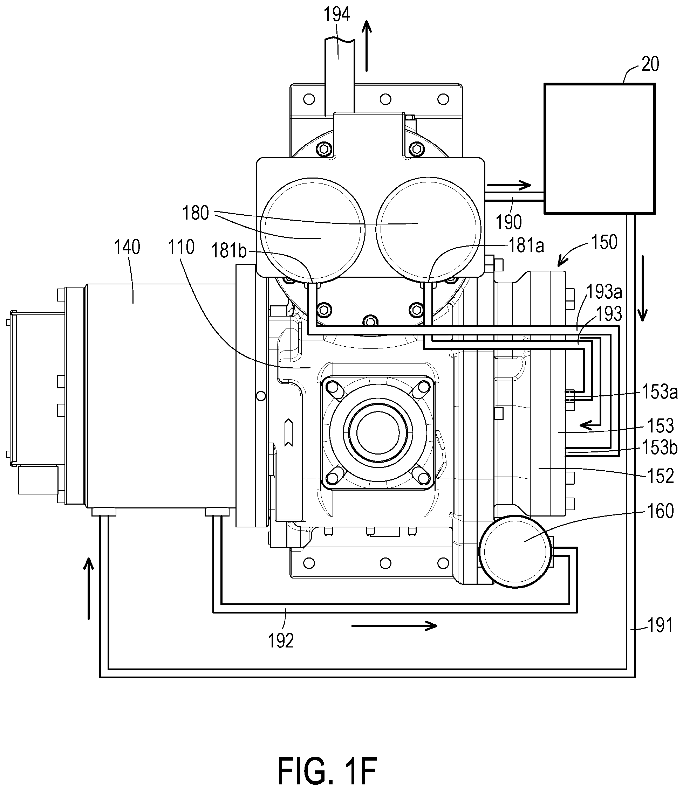

As shown in FIG. 1B, FIG. 1E, FIG. 1F and FIG. 2C, in the embodiment, the compressor structure 100 further includes a first external oil path 190, a second external oil path 191, a third external oil path 192 and at least one fourth external oil path 193. In detail, the bottom 132 of the oil-gas barrel 130 has a communication port 134. One end of the first external oil path 190 is connected to the communication port 134. The other end of the first external oil path 190 is connected to an external cooler 20. That is to say, the oil-gas barrel 130 is communicated with the external cooler 20 through the first external oil path 190.

On the other hand, the motor 140 includes a motor housing 141. The motor housing 141 has a cooling flow passage 141a. The cooling flow passage 141a has a first flow passage opening 141b and a second flow passage opening 141c that are opposite to each other. In detail, one end of the second external oil path 191 is connected to the external cooler 20. The other end of the second external oil path 191 is connected to the first flow passage opening 141b. That is to say, the external cooler 20 is communicated with the motor 140 through the second external oil path 191, specifically communicated with the cooling flow passage 141a of the motor housing 141.

In the embodiment, the oil filter base 151 has a communication port 151b. One end of the third external oil path 192 is connected to the second flow passage opening 141c. The other end of the third external oil path 192 is connected to the communication port 151b. That is to say, the motor 140 is communicated with the oil filter 160 through the third external oil path 192. Specifically, the cooling flow passage 141a of the motor housing 141 is communicated with the oil filter 160 through the third external oil path 192 and the oil filter base 151.

Specifically, the first flow passage opening 141b connected to the external cooler 20 may be an inlet of the cooling flow passage 141a. Correspondingly, the second flow passage opening 141c connected to the oil filter base 151 may be an outlet of the cooling flow passage 141a. In other examples, the external cooler 20 may be connected to the second flow passage opening 141c, and the oil filter base 151 may be connected to the first flow passage opening 141b, so that the second flow passage opening 141c serves as the inlet of the cooling flow passage 141a, and the first flow passage opening 141b serves as the outlet of the cooling flow passage 141a. That is to say, the inlet and the outlet of the cooling flow passage 141a may be interchangeably disposed according to actual application needs, which does not affect a cooling effect of the motor 140.

As shown in FIG. 1B and FIG. 1F, in the embodiment, the bearing assembly space 152b of the first assembly base 150 is covered or closed by the bearing base cover 153. The bearing base cover 153 has two communication ports 153a and 153b. On the other hand, two oil mist separators 180 are disposed on the second assembly base 170, and are respectively communicated with the first assembly base 150 through two fourth external oil paths 193 and 193a, specifically communicated with the bearing assembly space 152b.

Furthermore, the oil mist separator 180 relatively close to the first assembly base 150 has a communication port 181a, while the other oil mist separator 180 relatively away from the first assembly base 150 has a communication port 181b. One end of the fourth external oil path 193 is connected to the communication port 181a. The other end of the fourth external oil path 193 is connected to the communication port 153a relatively close to the two oil mist separators 180. In addition, one end of the fourth external oil path 193a is connected to the communication port 181b. The other end of the fourth external oil path 193a is connected to the communication port 153b relatively away from the two oil mist separators 180.

As shown in FIG. 1B, FIG. 1E, FIG. 1F and FIG. 2C, the lubricating oil stored in the oil-gas barrel 130 may be transported to the external cooler 20 through the first external oil path 190 to perform cooling. Next, the lubricating oil after being cooled may be transported to the cooling flow passage 141a of the motor housing 141 through the second external oil path 191 to perform cooling on the motor 140, preventing failure or damage of the motor 140 due to an excessively high operation temperature.

Then, the lubricating oil in the cooling flow passage 141a may be transported to the oil filter 160 through the third external oil path 192 and the oil filter base 151. Solid impurities in the lubricating oil may be filtered out through the oil filter 160. Next, as shown in FIG. 2B to FIG. 2D, the lubricating oil is transported to the first internal oil path 151a from the oil filter 160, and then transported to the second internal oil path 112 from the first internal oil path 151a. Then, the lubricating oil is injected or sprayed into the compression chamber 111 through the first oil injection hole 113 and the second oil injection hole 114 from the second internal oil path 112 to perform lubrication and cooling on the first rotor 101 and the second rotor 102.

Then, as shown in FIG. 1D, FIG. 1E, FIG. 2C and FIG. 2E, the mixed fluid formed by the lubricating oil and the compressed gas is discharged from the compression chamber 111, and sequentially flows through the oil-gas flow passage 152a and the annular flow passage 10 to sequentially perform the first oil-gas separation and the second oil-gas separation. Next, the compressed gas flows into the oil-gas separation space 171a from the bottom opening 1712, and then flows to the two oil mist separators 180 from the oil-gas port 1721 to perform the third oil-gas separation.

As shown in FIG. 1B, FIG. 1F and FIG. 2E, after the two oil mist separators 180 filter out the tiny oil droplets remaining in the compressed gas, the oil droplets may be transported to the bearing assembly space 152b through the two fourth external oil paths 193 and 193a to perform lubrication on the first bearing 103 and the second bearing 104. As shown in FIG. 1A, FIG. 1F and FIG. 2E, the oil mist separator 180 has a communication port 182 connected to an external gas path 194 to be communicated with a system through the external gas path 194. After the two oil mist separators 180 filter out the tiny oil droplets remaining in the compressed gas, the compressed gas with low oil content may be transported to the system through the external gas path 194.

Through the flow path design of the compressor structure 100, the lubricating oil may be fully used and recovered, and most of the lubricating oil may be separated from the compressed gas to prevent the compressed gas with high oil content from entering the system, while decreasing the consumption of the lubricating oil.

In the embodiment, after the two oil mist separators 180 individually filter out the tiny oil droplets remaining in the compressed gas, the oil droplets may enter the fourth external oil path 193 through the communication port 181a. At the same time, the oil droplets may enter the fourth external oil path 193a through the communication port 181b. Then, the oil droplets may be transported to the communication port 153a through the fourth external oil path 193 to be transported to the bearing assembly space 152b through the communication port 153a. At the same time, the oil droplets may be transported to the communication port 153b through the fourth external oil path 193a to be transported to the bearing assembly space 152b through the communication port 153b. Therefore, the oil droplets filtered by the two oil mist separators 180 may be transported to the bearing assembly space 152b through two transport paths.

In other examples, the two oil mist separators 180 may share a single communication port. The bearing base cover 153 has a single communication port. On the other hand, the communication port shared by the two oil mist separators 180 is connected to a communication port of the bearing base cover 153 through a single fourth external oil path to be communicated with the bearing assembly space 152b. Therefore, the oil droplets filtered by the two oil mist separators 180 may be transported to the bearing assembly space 152b through a single transport path.

In other examples, two communication ports of the two oil mist separators 180 are respectively connected to two fourth external oil paths. The two fourth external oil paths are connected to one communication port of the bearing base cover 153 through a common valve or a common communication pipe. In practical applications, the communication ports and one or multiple compatible fourth external oil paths of the oil mist separators 180 and the bearing base cover 153 may be configured according to the design needs of different compressor models.

Please refer to FIG. 1E and FIG. 2C to FIG. 2E. In the embodiment, the oil-gas barrel 130 further includes an oil sight glass 135. The oil sight glass 135 is disposed between the top 131 and the bottom 132, and is close to the lower half portion of the oil-gas barrel 130 to facilitate an observation of a liquid level of the lubricating oil stored in the oil-gas barrel 130, thereby determining an inventory of the lubricating oil. On the other hand, two rectifying plates 136 extending from the bottom 132 to the top 131 are disposed on the inside of the oil-gas barrel 130. The two rectifying plates 136 are located between the oil sight glass 135 and the oil tank 120.

When the mixed fluid performs cyclone separation in the annular flow passage 10 or when the lubricating oil drips toward the bottom 132, a liquid surface of the lubricating oil stored in the oil-gas barrel 130 may be disturbed, allowing the liquid surface to fluctuate. Since the two rectifying plates 136 may block or attenuating the fluctuation transmitted toward the oil sight glass 135, preventing an excessive undulation of the liquid level of the lubricating oil close to the oil sight glass 135 to decrease a condition where the inventory of the lubricating oil is misjudged.

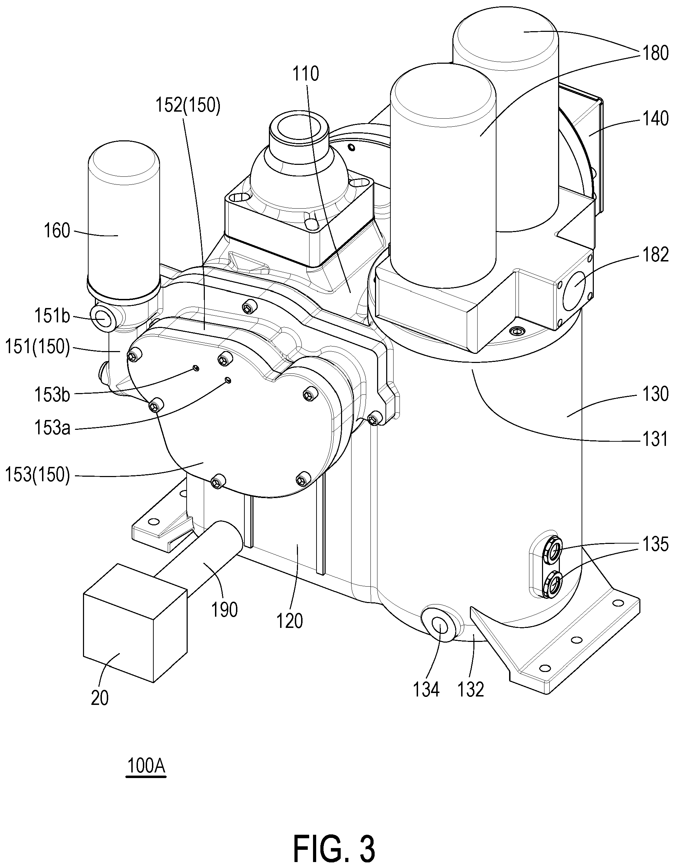

FIG. 3 is a schematic view of a configuration of an oil tank and an external cooler of a compressor structure according to another embodiment of the invention. In the compressor structure 100 of the previous embodiment, the oil-gas barrel 130 is communicated with the external cooler 20 through the first external oil path 190. Please refer to FIG. 3. In a compressor structure 100A of the embodiment, the first external oil path 190 may be connected between the oil tank 120 and the external cooler 20. That is to say, the oil tank 120 is communicated with the external cooler 20 through the first external oil path 190 to transport the lubricating oil stored in the oil tank 120 to the external cooler 20 through the first external oil path 190 to perform cooling.

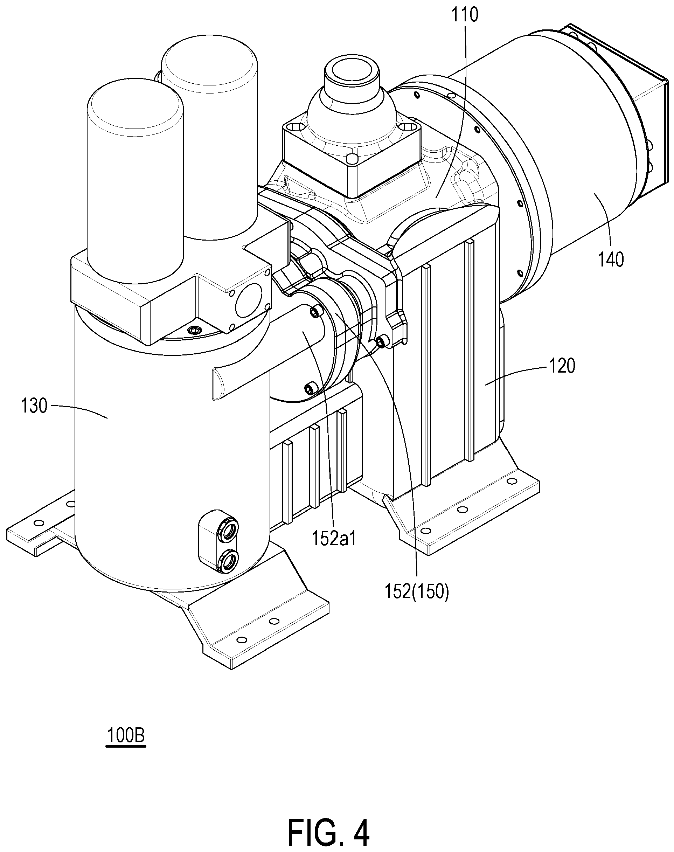

FIG. 4 is a schematic view of a compressor structure according to yet another embodiment of the invention. Please refer to FIG. 4. Different from the compressor structure 100 shown in FIG. 1A to FIG. 1C, in a compressor structure 100B of the embodiment, the motor 140 and the first assembly base 150 are respectively disposed on opposite sides of the compressor housing 110. The bearing base 152 is disposed between the oil-gas barrel 130 and the compressor housing 110. That is to say, the oil-gas barrel 130 is disposed opposite to the motor 140 through the bearing base 152. Based on this configuration, an oil-gas flow passage 152a1 extends toward the oil-gas barrel 130 from the bearing base 152 to communicate with the oil-gas barrel 130, and is on different planes in space with the bearing base 152 and the bearing assembly space inside.

In summary, in the compressor structure of the invention, the mixed fluid formed by the lubricating oil and the compressed gas may first perform the first oil-gas separation through the centrifugal force in the oil-gas flow passage after being discharged from the compression chamber. Next, the mixed fluid enters the oil-gas barrel from the oil-gas flow passage and performs the second oil-gas separation through cyclone separation in the oil-gas barrel to separate most of the lubricating oil from the compressed gas. Next, the compressed gas flows into the oil-gas separation space from the bottom opening, and then flows to the oil mist separator from the oil-gas port to perform the third oil-gas separation. That is to say, different from the conventional compressor structure that directly transports the mixed fluid into the oil tank from the compression chamber to perform oil-gas separation, the compressor structure of the invention utilizes a three-stage oil-gas separation procedure to significantly decrease an oil content of the compressed gas. Therefore, the compressor structure of the invention can not only prevent the compressed gas with high oil content from entering the system, but also can decrease the consumption of the lubricating oil.

Furthermore, in the compressor structure of the invention, the oil filter and the oil mist separator are designed to be external, which facilitates an enhancement of the compactness of the structural configuration to reduce volume. On the other hand, the compressor housing, the oil tank, and the oil-gas barrel are integrally cast and formed, which can not only significantly improve structural strength, decrease assembly processes, improve manufacturing efficiency and reduce manufacturing costs, but also can improve sealing performance to effectively decrease the oil-gas leakage phenomenon. The advantage of utilizing a structure integrally cast and formed is that relative positions of the compressor housing, the oil tank, and the oil-gas barrel may be changed according to actual application needs, and the oil tank and the oil-gas barrel that communicate facilitate an increase of oil storage capacity. In addition, the lubricating oil after being cooled may first perform cooling on the motor, and then be injected or sprayed into the compression chamber to perform lubrication and cooling on the first rotor and the second rotor, significantly improving an integration of the oil paths and a usage rate of the lubricating oil.

## Claims

1. A compressor structure (100, 100A, 100B), comprising:
a compressor housing (110), having a compression chamber (111);
an oil tank (120);
an oil-gas barrel (130);
a motor (140);
a first assembly base (150);
at least one oil filter (160);
a second assembly base (170); and
at least one oil mist separator (180),
the compressor structure (100, 100A, 100B) is **characterized in that**
the oil-gas barrel (130) is integrally cast and formed with the compressor housing (110) and the oil tank (120),
the motor (140) and the first assembly base (150) are respectively disposed on opposite sides of the compressor housing (110), wherein the first assembly base (150) has an oil-gas flow passage (152a, 152a1), and the compression chamber (111) is communicated with the oil-gas barrel (130) through the oil-gas flow passage (152a, 152a1),
the oil filter (160) is disposed on the first assembly base (150) and communicated with the compression chamber (111) through the first assembly base (150),
the second assembly base (170) is disposed on the oil-gas barrel (130).
the oil mist separator (180) is disposed on the second assembly base (170) and communicated with the oil-gas barrel (130) through the second assembly base (170).

2. The compressor structure (100, 100A, 100B) according to claim 1, wherein the oil-gas barrel (130) comprises a top (131) and a bottom (132), and the top (131) has a top opening (131a), the second assembly base (170) is disposed on the top (131) and covers the top opening (131a), the second assembly base (170) comprises an oil-gas separation cylinder (171), and the oil-gas separation cylinder (171) is inserted into the oil-gas barrel (130) from the top opening (131a) and extends toward the bottom (132).

3. The compressor structure (100, 100A, 100B) according to claim 2, wherein
an annular flow passage (10) is formed between an inner wall surface (133) of the oil-gas barrel (130) and an outer wall surface (1711) of the oil-gas separation cylinder (171), and the oil-gas flow passage (152a, 152a1) is communicated with the annular flow passage (10),
a communication position of the oil-gas flow passage (152a, 152a1) and the annular flow passage (10) is close to the top opening (131a), and the oil-gas separation cylinder (171) has an oil-gas separation space (171a) surrounded by the annular flow passage (10), and the oil-gas separation space (171a) has a bottom opening (1712) facing the bottom (132), and
the oil mist separator (180) is communicated with the oil-gas barrel (130) through the oil-gas separation space (171a).

4. The compressor structure (100, 100A, 100B) according to claim 3, wherein the second assembly base (170) further comprises a barrel cover (172) connected to the oil-gas separation cylinder (171), and the barrel cover (172) covers the top opening (131a), the oil mist separator (180) is disposed on the barrel cover (172), wherein the barrel cover (172) has an oil-gas port (1721), and the oil mist separator (180) is communicated with the oil-gas separation space (171a) through the oil-gas port (1721).

5. The compressor structure (100, 100A, 100B) according to claim 4, wherein the oil-gas separation cylinder (171) and the barrel cover (172) are integrally cast and formed.

6. The compressor structure (100, 100A, 100B) according to claim 3, wherein the oil-gas flow passage (152a, 152a1) and the communication position compose an internal channel, one end of the internal channel is communicated with a gas outlet of the compression chamber (111), and the other end of the internal channel is communicated with the oil-gas barrel (130) facing a tangential direction of the outer wall surface of the oil-gas separation barrel (130).

7. The compressor structure (100, 100A, 100B) according to claim 1, wherein the first assembly base (150) comprises an oil filter base (151) and a bearing base (152), and the oil filter base (151) and the bearing base (152) are integrally cast and formed, the oil filter (160) is disposed on the oil filter base (151) and communicated with the compression chamber (111) through the oil filter base (151), the first assembly base (150) further has a bearing assembly space (152b) separated from the oil-gas flow passage (152a, 152a1), and the oil-gas flow passage (152a, 152a1) and the bearing assembly space (152b) are formed in the bearing base (152), and the compressor structure (100, 100A, 100B) further comprises:
a first rotor (101), coupled to the motor (140);
a second rotor (102), disposed in the compression chamber (111) with the first rotor (101), and engaging with each other; and
a first bearing (103) and a second bearing (104), disposed in the bearing assembly space (152b), wherein an end of the first rotor (101) is inserted into the bearing assembly space (152b), and the first bearing (103) is sleeved on the end of the first rotor (101), an end of the second rotor (102) is inserted into the bearing assembly space (152b), and the second bearing (104) is sleeved on the end of the second rotor (102),
the first assembly base (150) further comprises a bearing base cover (153), wherein the bearing base cover (153) is disposed on the bearing base (152) and covers the bearing assembly space (152b) and the oil-gas flow passage (152a, 152a1).

8. The compressor structure (100, 100A, 100B) according to claim 7, wherein the oil filter base (151) has a first internal oil path (151a), and the compressor housing (110) further has a second internal oil path (112) communicating with the compression chamber (111), the first internal oil path (151a) is communicated with the second internal oil path (112), and the oil filter (160) is communicated with the compression chamber (111) through the first internal oil path (151a) and the second internal oil path (112).

9. The compressor structure (100, 100A, 100B) according to claim 7, wherein the oil tank (120) is disposed under the compressor housing (110), and the oil-gas barrel (130) is disposed opposite to the motor (140) through the bearing base (152).

10. The compressor structure (100, 100A, 100B) according to claim 1, wherein
the oil-gas flow passage (152a, 152a1) extends along an arc path and has a first port (1521) communicated with the compression chamber (111) and a second port (1522) communicated with the oil-gas barrel (130), and
there is a height difference between the second port (1522) and the first port (1521) in a gravity direction.

11. The compressor structure (100, 100A, 100B) according to claim 1, further comprising:
a first external oil path (190), wherein the oil-gas barrel (130) is communicated with an external cooler (20) through the first external oil path (190);
a second external oil path (191), wherein the external cooler (20) is communicated with the motor (140) through the second external oil path (191);
a third external oil path (192), wherein the motor (140) is communicated with the oil filter (160) through the third external oil path (192); and
at least one fourth external oil path (193), wherein the oil mist separator (180) is communicated with the first assembly base (150) through the fourth external oil path (193).

12. The compressor structure (100, 100A, 100B) according to claim 11, wherein the first assembly base (150) further has a bearing assembly space (152b) separated from the oil-gas flow passage (152a, 152a1), and the fourth external oil path (193) is communicated with the bearing assembly space (152b).

13. The compressor structure (100, 100A, 100B) according to claim 11, wherein the motor (140) comprises a motor housing (141), and the motor housing (141) has a cooling flow passage (141a), the external cooler (20) is communicated with an inlet of the cooling flow passage (141a) through the second external oil path (191), and an outlet of the cooling flow passage (141a) is communicated with the oil filter (160) through the third external oil path (192).

14. The compressor structure (100, 100A, 100B) according to claim 1, wherein the oil tank (120) is disposed under the compressor housing (110), and the oil-gas barrel (130) is disposed on a side of the oil tank (120).

15. The compressor structure (100, 100A, 100B) according to claim 1, wherein a lower half portion of an internal space of the oil-gas barrel (130) communicates with the oil tank (120).

16. The compressor structure (100, 100A, 100B) according to claim 1, further comprising:
an external oil path, wherein the oil tank (120) is communicated with an external cooler (20) through the external oil path.

## Patentansprüche

1. Ein Kompressoraufbau (100, 100A, 100B), der Folgendes aufweist:
ein Kompressorgehäuse (110) mit einer Kompressionskammer (111);
einen Öltank (120);
einen Öl-Gas-Zylinder (130);
einen Motor (140);
eine erste Montagebasis (150);
mindestens einen Ölfilter (160);
eine zweite Montagebasis (170); und
mindestens einen Ölnebelabscheider (180),
wobei der Kompressoraufbau (100, 100A, 100B) **dadurch gekennzeichnet ist, dass**
der Öl-Gas-Zylinder (130) einstückig mit dem Kompressorgehäuse (110) und dem Öltank (120) gegossen und geformt ist,
der Motor (140) und die erste Montagebasis (150) jeweils auf gegenüberliegenden Seiten des Kompressorgehäuses (110) angeordnet sind, wobei die erste Montagebasis (150) einen Öl-Gas-Strömungskanal (152a, 152a1) aufweist und die Kompressionskammer (111) über den Öl-Gas-Durchflusskanal (152a, 152a1) mit dem Öl-Gas-Zylinder (130) verbunden ist,
der Ölfilter (160) auf der ersten Montagebasis (150) angeordnet ist und über die erste Montagebasis (150) mit der Verdichtungskammer (111) in Verbindung steht,
die zweite Montagebasis (170) auf dem Öl-Gas-Zylinder (130) angeordnet ist,
der Ölnebelabscheider (180) auf der zweiten Montagebasis (170) angeordnet und über die zweite Montagebasis (170) mit dem Öl-Gas-Zylinder (130) verbunden ist.

2. Kompressoraufbau (100, 100A, 100B) nach Anspruch 1, wobei der Öl-Gas-Zylinder (130) einen oberen Teil (131) und einen unteren Teil (132) aufweist und der obere Teil (131) eine obere Öffnung (131a) aufweist, die zweite Montagebasis (170) auf dem oberen Teil (131) angeordnet ist und die obere Öffnung (131a) abdeckt, die zweite Montagebasis (170) einen Öl-Gas-Trennzylinder (171) aufweist und der Öl-Gas-Trennzylinder (171) von der oberen Öffnung (131a) her in den Öl-Gas-Zylinder (130) eingeführt ist und sich in Richtung des Bodens (132) erstreckt.

3. Kompressoraufbau (100, 100A, 100B) nach Anspruch 2, wobei
ein ringförmiger Strömungskanal (10) zwischen einer Innenwandfläche (133) des Öl-Gas-Zylinders (130) und einer Außenwandfläche (1711) des Öl-Gas-Trennzylinders (171) ausgebildet ist und der Öl-Gas-Strömungskanal (152a, 152a1) mit dem ringförmigen Strömungskanal (10) in Verbindung steht,
sich eine Verbindungsstelle des Öl-Gas-Strömungskanals (152a, 152a1) und des ringförmigen Strömungskanals (10) in der Nähe der oberen Öffnung (131a) befindet, und der Öl-Gas-Trennzylinder (171) einen Öl-Gas-Trennraum (171a) aufweist, der von dem ringförmigen Strömungskanal (10) umgeben ist, und der Öl-Gas-Trennraum (171a) eine dem Boden (132) zugewandte Bodenöffnung (1712) aufweist, und
der Ölnebelabscheider (180) über den Öl-Gas-Trennraum (171a) mit dem Öl-Gas-Zylinder (130) verbunden ist.

4. Kompressoraufbau (100, 100A, 100B) nach Anspruch 3, wobei die zweite Montagebasis (170) ferner eine mit dem Öl-Gas-Trennzylinder (171) verbundene Zylinderabdeckung (172) aufweist und die Zylinderabdeckung (172) die obere Öffnung (131a) abdeckt, der Ölnebelabscheider (180) auf der Zylinderabdeckung (172) angeordnet ist, wobei die Zylinderabdeckung (172) eine Öl-Gas-Öffnung (1721) aufweist und der Ölnebelabscheider (180) über die Öl-Gas-Öffnung (1721) mit dem Öl-Gas-Trennraum (171a) in Verbindung steht.

5. Kompressoraufbau (100, 100A, 100B) nach Anspruch 4, wobei der Öl-Gas-Trennzylinder (171) und der Zylinderdeckel (172) einstückig gegossen und geformt sind.

6. Kompressoraufbau (100, 100A, 100B) nach Anspruch 3, wobei der Öl-Gas-Strömungskanal (152a, 152a1) und die Verbindungsstelle einen inneren Kanal bilden, wobei ein Ende des inneren Kanals mit einem Gasauslass der Kompressionskammer (111) verbunden ist und das andere Ende des inneren Kanals mit dem Öl-Gas-Zylinder (130) verbunden ist, der in tangentialer Richtung zur Außenwandfläche des Öl-Gas-Trennzylinders (130) ausgerichtet ist.

7. Kompressoraufbau (100, 100A, 100B) nach Anspruch 1, wobei die erste Montagebasis (150) eine Ölfilterbasis (151) und eine Lagerbasis (152) aufweist und die Ölfilterbasis (151) und die Lagerbasis (152) einstückig gegossen und geformt sind, der Ölfilter (160) auf der Ölfilterbasis (151) angeordnet ist und über die Ölfilterbasis (151) mit der Kompressionskammer (111) in Verbindung steht, die erste Montagebasis (150) ferner einen von dem Öl-Gas-Strömungskanal (152a, 152a1) getrennten Lagerbauraum (152b) aufweist, und der Öl-Gas-Strömungskanal (152a, 152a1) sowie der Lagerbauraum (152b) in der Lagerbasis (152) ausgebildet sind, und die Verdichterstruktur (100, 100A, 100B) ferner aufweist:
einen ersten Rotor (101), der mit dem Motor (140) gekoppelt ist;
einen zweiten Rotor (102), der zusammen mit dem ersten Rotor (101) in der Verdichtungskammer (111) angeordnet ist und mit diesem in Eingriff steht; und
ein erstes Lager (103) und ein zweites Lager (104), die im Lagerbauraum (152b) angeordnet sind, wobei ein Ende des ersten Rotors (101) in den Lagerbauraum (152b) eingeführt ist und das erste Lager (103) auf das Ende des ersten Rotors (101) aufgeschoben ist, ein Ende des zweiten Rotors (102) in den Lagerbauraum (152b) eingeführt ist und das zweite Lager (104) am Ende des zweiten Rotors (102) aufgeschoben ist,
die erste Montagebasis (150) ferner eine Lagerbasisabdeckung (153) aufweist, wobei die Lagerbasisabdeckung (153) auf der Lagerbasis (152) angeordnet ist und den Lagerbauraum (152b) sowie den Öl-Gas-Strömungskanal (152a, 152a1) abdeckt.

8. Kompressoraufbau (100, 100A, 100B) nach Anspruch 7, wobei die Ölfilterbasis (151) einen ersten internen Ölweg (151a) aufweist und das Kompressorgehäuse (110) ferner einen zweiten internen Ölweg (112) aufweist, der mit der Verdichtungskammer (111) in Verbindung steht, der erste interne Ölkanal (151a) mit dem zweiten internen Ölkanal (112) verbunden ist und der Ölfilter (160) über den ersten internen Ölkanal (151a) und den zweiten internen Ölkanal (112) mit der Verdichtungskammer (111) verbunden ist.

9. Kompressoraufbau (100, 100A, 100B) nach Anspruch 7, wobei der Öltank (120) unterhalb des Kompressorgehäuses (110) angeordnet ist und der Öl-Gas-Zylinder (130) gegenüber dem Motor (140) über die Lagerbasis (152) angeordnet ist.

10. Kompressoraufbau (100, 100A, 100B) nach Anspruch 1, wobei
sich der Öl-Gas-Strömungskanal (152a, 152a1) entlang einer bogenförmigen Bahn erstreckt und eine erste Öffnung (1521), die mit der Verdichtungskammer (111) in Verbindung steht, sowie eine zweite Öffnung (1522) aufweist, die mit dem Öl-Gas-Zylinder (130) in Verbindung steht, und
zwischen der zweiten Öffnung (1522) und der ersten Öffnung (1521) in Schwerkraftrichtung ein Höhenunterschied besteht.

11. Kompressoraufbau (100, 100A, 100B) nach Anspruch 1, der ferner aufweist:
einen ersten externen Ölkreislauf (190), wobei der Öl-Gas-Zylinder (130) über den ersten externen Ölkreislauf (190) mit einem externen Kühler (20) verbunden ist;
einen zweiten externen Ölkreislauf (191), wobei der externe Kühler (20) über den zweiten externen Ölkreislauf (191) mit dem Motor (140) verbunden ist;
einen dritten externen Ölkreislauf (192), wobei der Motor (140) über den dritten externen Ölkreislauf (192) mit dem Ölfilter (160) verbunden ist; und
mindestens einen vierten externen Ölkanal (193), wobei der Ölnebelabscheider (180) über den vierten externen Ölkanal (193) mit der ersten Montagebasis (150) verbunden ist.

12. Kompressoraufbau (100, 100A, 100B) nach Anspruch 11, wobei die erste Montagebasis (150) ferner einen Lagerbauraum (152b) aufweist, der vom Öl-Gas-Strömungskanal (152a, 152a1) getrennt ist, und der vierte externe Ölkanal (193) mit dem Lagerbauraum (152b) in Verbindung steht.

13. Kompressoraufbau (100, 100A, 100B) nach Anspruch 11, wobei der Motor (140) ein Motorgehäuse (141) aufweist und das Motorgehäuse (141) einen Kühlströmungskanal (141a) aufweist, der externe Kühler (20) über den zweiten externen Ölkanal (191) mit einem Einlass des Kühlströmungskanals (141a) verbunden ist und ein Auslass des Kühlströmungskanals (141a) über den dritten externen Ölkanal (192) mit dem Ölfilter (160) verbunden ist.

14. Kompressoraufbau (100, 100A, 100B) nach Anspruch 1, wobei der Öltank (120) unterhalb des Kompressorgehäuses (110) angeordnet ist und der Öl-Gas-Zylinder (130) an einer Seite des Öltanks (120) angeordnet ist.

15. Kompressoraufbau (100, 100A, 100B) nach Anspruch 1, wobei ein unterer Halbbereich eines Innenraums des Öl-Gas-Zylinders (130) mit dem Öltank (120) in Verbindung steht.

16. Kompressoraufbau (100, 100A, 100B) nach Anspruch 1, der ferner aufweist:
einen externen Ölkreislauf, wobei der Öltank (120) über den externen Ölkreislauf mit einem externen Kühler (20) verbunden ist.

## Revendications

1. Structure de compresseur (100, 100A, 100B), comprenant :
un carter de compresseur (110), comportant une chambre de compression (111) ;
un réservoir d'huile (120) ;
un réservoir huile-gaz (130) ;
un moteur (140) ;
une première base d'assemblage (150) ;
au moins un filtre à huile (160) ;
une deuxième base d'assemblage (170) ; et
au moins un séparateur de brouillard d'huile (180),
la structure de compresseur (100, 100A, 100B) est **caractérisée en ce que**
le cylindre huile-gaz (130) est moulé d'un seul tenant avec le carter du compresseur (110) et le réservoir d'huile (120),
le moteur (140) et la première base d'assemblage (150) sont respectivement disposés sur les côtés opposés du carter du compresseur (110), la première base d'assemblage (150) comportant un passage d'écoulement huile-gaz (152a, 152a1), et la chambre de compression (111) communique avec le cylindre huile-gaz (130) par l'intermédiaire du passage d'écoulement d'huile et de gaz (152a, 152a1),
le filtre à huile (160) est disposé sur la première base d'assemblage (150) et communique avec la chambre de compression (111) par l'intermédiaire de la première base d'assemblage (150),
la deuxième base d'assemblage (170) est disposée sur le cylindre huile-gaz (130),
le séparateur de brouillard d'huile (180) est disposé sur la deuxième base d'assemblage (170) et communique avec le cylindre huile-gaz (130) par l'intermédiaire de la deuxième base d'assemblage (170).

2. Structure de compresseur (100, 100A, 100B) selon la revendication 1, dans laquelle le fût huile-gaz (130) comprend une partie supérieure (131) et une partie inférieure (132), et la partie supérieure (131) présente une ouverture supérieure (131a), la deuxième base d'assemblage (170) est disposée sur la partie supérieure (131) et recouvre l'ouverture supérieure (131a), la deuxième base d'assemblage (170) comprend un cylindre de séparation huile-gaz (171), et le cylindre de séparation huile-gaz (171) est inséré dans le fût de séparation huile-gaz (130) par l'ouverture supérieure (131a) et s'étend vers le fond (132).

3. Structure de compresseur (100, 100A, 100B) selon la revendication 2, dans laquelle
un passage d'écoulement annulaire (10) est formé entre une surface de paroi intérieure (133) du fût de séparation huile-gaz (130) et une surface de paroi extérieure (1711) du cylindre de séparation huile-gaz (171), et le passage d'écoulement huile-gaz (152a, 152a1) communique avec le passage d'écoulement annulaire (10),
un point de communication entre le passage d'écoulement de pétrole et de gaz (152a, 152a1) et le passage d'écoulement annulaire (10) est situé à proximité de l'ouverture supérieure (131a), et le cylindre de séparation pétrole-gaz (171) comporte un espace de séparation pétrole-gaz (171a) entouré par le passage d'écoulement annulaire (10), et l'espace de séparation pétrole-gaz (171a) comporte une ouverture inférieure (1712) tournée vers le fond (132), et
le séparateur de brouillard d'huile (180) communique avec le fût de séparation huile-gaz (130) par l'intermédiaire de l'espace de séparation huile-gaz (171a).

4. Structure de compresseur (100, 100A, 100B) selon la revendication 3, dans laquelle la deuxième base d'assemblage (170) comprend en outre un couvercle de cylindre (172) relié au cylindre de séparation huile-gaz (171), et le couvercle de cylindre (172) recouvre l'ouverture supérieure (131a), le séparateur de brouillard d'huile (180) est disposé sur le couvercle de cylindre (172), le couvercle de cylindre (172) comportant un orifice de séparation huile-gaz (1721), et le séparateur de brouillard d'huile (180) communiquant avec l'espace de séparation huile-gaz (171a) par l'intermédiaire de l'orifice de séparation huile-gaz (1721).

5. Structure de compresseur (100, 100A, 100B) selon la revendication 4, dans laquelle le cylindre de séparation huile-gaz (171) et le couvercle de cylindre (172) sont moulés et formés d'un seul tenant.

6. Structure de compresseur (100, 100A, 100B) selon la revendication 3, dans laquelle le passage d'écoulement huile-gaz (152a, 152a1) et le point de communication forment un canal interne, une extrémité du canal interne communiquant avec une sortie de gaz de la chambre de compression (111), et l'autre extrémité du canal interne communiquant avec le cylindre de séparation huile-gaz (130) en direction tangentielle par rapport à la surface de la paroi extérieure du cylindre de séparation huile-gaz (130).

7. Structure de compresseur (100, 100A, 100B) selon la revendication 1, dans laquelle la première base d'assemblage (150) comprend une base de filtre à huile (151) et une base de palier (152), et la base de filtre à huile (151) et la base de palier (152) sont moulées et formées d'un seul tenant, le filtre à huile (160) est disposé sur la base de filtre à huile (151) et communique avec la chambre de compression (111) par l'intermédiaire de la base de filtre à huile (151), la première base d'assemblage (150) comporte en outre un espace d'assemblage de palier (152b) séparé du passage d'écoulement huile-gaz (152a, 152a1), et le passage d'écoulement huile-gaz (152a, 152a1) ainsi que l'espace d'assemblage de palier (152b) sont formés dans la base de palier (152), et la structure de compresseur (100, 100A, 100B) comprend en outre :
un premier rotor (101), couplé au moteur (140) ;
un deuxième rotor (102), disposé dans la chambre de compression (111) avec le premier rotor (101), et en prise l'un avec l'autre ; et
un premier palier (103) et un deuxième palier (104), disposés dans l'espace d'assemblage des paliers (152b), dans lequel une extrémité du premier rotor (101) est insérée dans l'espace d'assemblage des paliers (152b), et le premier palier (103) est emmanché sur l'extrémité du premier rotor (101), une extrémité du deuxième rotor (102) est insérée dans l'espace d'assemblage des roulements (152b), et le deuxième roulement (104) est emmanché sur l'extrémité du deuxième rotor (102),
la première base d'assemblage (150) comprend en outre un couvercle de base de palier (153), le couvercle de base de palier (153) étant disposé sur la base de palier (152) et recouvrant l'espace d'assemblage du palier (152b) et le passage d'écoulement d'huile et de gaz (152a, 152a1).

8. Structure de compresseur (100, 100A, 100B) selon la revendication 7, dans laquelle la base de filtre à huile (151) comporte un premier circuit d'huile interne (151a), et le carter de compresseur (110) comporte en outre un deuxième circuit d'huile interne (112) communiquant avec la chambre de compression (111), le premier circuit d'huile interne (151a) communique avec le deuxième circuit d'huile interne (112), et le filtre à huile (160) communique avec la chambre de compression (111) par l'intermédiaire du premier circuit d'huile interne (151a) et du deuxième circuit d'huile interne (112).

9. Structure de compresseur (100, 100A, 100B) selon la revendication 7, dans laquelle le réservoir d'huile (120) est disposé sous le carter de compresseur (110), et le cylindre huile-gaz (130) est disposé à l'opposé du moteur (140) de part et d'autre de la base de palier (152).

10. Structure de compresseur (100, 100A, 100B) selon la revendication 1, dans laquelle
le passage d'écoulement huile-gaz (152a, 152a1) s'étend le long d'un trajet en arc et comporte un premier orifice (1521) communiquant avec la chambre de compression (111) et un deuxième orifice (1522) communiquant avec le cylindre huile-gaz (130), et
il existe une différence de hauteur entre le deuxième orifice (1522) et le premier orifice (1521) dans la direction de la gravité.

11. Structure de compresseur (100, 100A, 100B) selon la revendication 1, comprenant en outre :
un premier circuit d'huile externe (190), dans lequel le cylindre huile-gaz (130) communique avec un refroidisseur externe (20) par l'intermédiaire du premier circuit d'huile externe (190) ;
un deuxième circuit d'huile externe (191), dans lequel le refroidisseur externe (20) est relié au moteur (140) par l'intermédiaire du deuxième circuit d'huile externe (191) ;
un troisième circuit d'huile externe (192), dans lequel le moteur (140) est relié au filtre à huile (160) par l'intermédiaire du troisième circuit d'huile externe (192) ; et
au moins un quatrième circuit d'huile externe (193), dans lequel le séparateur de brouillard d'huile (180) est relié à la première base d'assemblage (150) par l'intermédiaire du quatrième circuit d'huile externe (193).

12. Structure de compresseur (100, 100A, 100B) selon la revendication 11, dans laquelle la première base d'assemblage (150) comporte en outre un espace d'assemblage de palier (152b) séparé du passage d'écoulement huile-gaz (152a, 152a1), et le quatrième circuit d'huile externe (193) communique avec l'espace d'assemblage des paliers (152b).

13. Structure de compresseur (100, 100A, 100B) selon la revendication 11, dans laquelle le moteur (140) comprend un carter de moteur (141), et le carter de moteur (141) comporte un passage d'écoulement de refroidissement (141a), le refroidisseur externe (20) communique avec une entrée du passage d'écoulement de refroidissement (141a) par l'intermédiaire du deuxième circuit d'huile externe (191), et une sortie du passage d'écoulement de refroidissement (141a) communique avec le filtre à huile (160) par l'intermédiaire du troisième circuit d'huile externe (192).

14. Structure de compresseur (100, 100A, 100B) selon la revendication 1, dans laquelle le réservoir d'huile (120) est disposé sous le carter de compresseur (110), et le cylindre huile-gaz (130) est disposé sur un côté du réservoir d'huile (120).

15. Structure de compresseur (100, 100A, 100B) selon la revendication 1, dans laquelle une moitié inférieure de l'espace interne du cylindre huile-gaz (130) communique avec le réservoir d'huile (120).

16. Structure de compresseur (100, 100A, 100B) selon la revendication 1, comprenant en outre :
un circuit d'huile externe, le réservoir d'huile (120) communiquant avec un refroidisseur externe (20) par l'intermédiaire dudit circuit d'huile externe.
